# EUROPEAN PATENT SPECIFICATION

(11) **EP 0 724 127 B1**
(45) Date of publication and mention of the grant of the patent: **02.01.2003**
(21) Application number: 96830034.3
(22) Date of filing: 26.01.1996
(51) Int. Cl.: F28F 3/08, F28F 3/02, F28F 13/12

(54) **Flat-plate heat and mass transfer exchanger**
Platten - Stoff- und Wärmetauscher
Echangeur de chaleur et de matière à plaques

(30) Priority: 27.01.1995 IT RM950048
(43) Date of publication of application: 31.07.1996
(73) Proprietor: ENEA ENTE PER LE NUOVE TECNOLOGIE, L'ENERGIA E L'AMBIENTE, 00196 Roma (IT); SOCIETA ITALIANA PER IL GAS S.p.A., 10121 Torino (IT); MERLONI TERMOSANITARI S.p.A., 60044 Fabriano (Ancona) (IT)
(72) Inventor: Giacometti, Diana, 00123 Roma (IT); Giacometti, Paola, 00123 Roma (IT); Petracca, Gaetana, Roma (IT)
(74) Representative: Sarpi, Maurizio

(56) References cited:
- WO-A-90/13784
- DE-A- 4 238 192
- FR-A- 2 290 646

## Description

The present invention relates to a heat and mass transfer exchanger which utilizes the turbulent motion of a fluid stream to improve the exchange efficiency.

There are known in the art heat exchangers formed of plates operating with turbulent fluid and using, as illustrated thereafter, at least two corrugated plates or two plates between which a gap with a mesh screen is provided so as to create a turbulence in the fluid flowing in the gap. Italian Patent No. 1192543 discloses a heat exchanger which is provided with two plates separated by a gap in which a fluid is flowing and which contains a not continuous member to create a turbulence. As mentioned above, in the practice of such Patent a common mesh screen is used. Even if such a solution is valid, easy and economical, however, it has the serious disadvantage of needing spacers, linings or sealings to improve the gap seal, besides the need of slabs holding the whole pack of plates forming the exchanger. The latter are necessary to press the plates so as to keep them tight to one another and to withstand the pressure of the fluid.
In order to provide a plate-screen-plate welding the resort to the welding or the sealing requires a very narrow tolerance and a very high machining precision such as to have a considerable increase in the production cost.

A flat-plate heat and mass transfer exchanger according to the preamble of claim 1 is known from documents DE 42 38-192 and WO 9013784.

It is known, from DE4238192, a heat exchanger wherein the structure consists of at least two channel systems. These are located above each other, in layers, which are separated by at least one card. Each system contains channels with obstacles, which project alternately into the channels. The channels open into diagonally opposite connection and distribution channels, for even supply.
It is also known, from WO9013784 a heat exchanger including a plurality of fluid pathways in which at least some are defined between surfaces of unperforated primary plates. Between the primary plates are at least two secondary perforated plates extending along the fluid pathway with perforations in adjacent plates being staggered. Adjacent secondary and primary sheets are in contact such that conducting pathways are formed extending between the two primary surfaces while areas of secondary plates not in contact with other secondary plates constitute secondary surfaces.
A disadvantage of the heat exchangers disclosed in said documents is that both of them are characterized by a complicated assemblage and by a structure that requires high manufacturing costs.

According to the invention, such problems are overcome by providing a flat-plate heat and mass transfer exchanger which permits an easy and rapid assembling of the several components, while ensuring a perfect seal and allowing thinner sheets to be used.

The heat and mass transfer exchanger is essentially comprised of exchanger elements each formed of four flat plates defining within each exchanger element a turbulence path for the fluids flowing at any speeds, with all of said plates being flat and parallel and having a generally rectangular form.
In case of parallel connected exchanger elements, the separation plates of the exchanger are shared by such parallel elements which have four through holes at the ends of the plate diagonals so that the fluids can flow to the adjacent exchanger elements. Therefore, only the exchanger element at the blind end of the exchanger has outer plates different from each other: one plate looks like that described above, the other plate is blind.
In case of exchanger elements connected in series, the separation plates between the exchanger elements have two through holes, instead of four, near the ends of the plate diagonals to allow the fluid to flow to the nearby exchanger elements, said two through holes being adjacent to one minor side of the separation plate.
The two inner plates of each exchanger element are equal but overturned to each other and, besides the four above-mentioned holes, have a group of holes formed according to a geometry such that said group of holes of one inner plate are misaligned to the group of holes of the adjacent plate as the plates are rotated through 180° to each other. Thus, the fluids flowing along said perforated plates follows a very winding way which causes a turbulent motion and facilitates the thermal exchange and the mixing.
The two outermost groups of holes parallel to the minor sides have some holes connected to one another and to the two holes near the ends of a plate diagonal, respectively, said two holes being crossed by the fluid passing from one element to the other.
The assembling of the several plates of the exchanger is made without using any gasket and by automatic centering by simple pins. In fact, each either inner or outer or end plate has two holes near the minor sides and positioned along the longitudinal midline of the plate.

The invention will be more readily understood from the following detailed description of a preferred embodiment with reference to the accompanying drawings, in which:
Figure 1 is a plan view of an outer plate of each exchanger element in case of parallel connected elements;
Figure 2 is a plan view of one of the two inner plates of each exchanger element;
Figure 3 is a plane view of a blind end plate;
Figure 4 is a perspective view showing two inner plates as in Figure 2 placed side by side so that the-holes are shifted;
Figure 5 is an exploded view of a parallel connected two-element exchanger;
Figure 6 shows a section view of a detail of the way followed by the fluid within the exchanger of Figure 5; and
Figure 7 is a plan view of an outer plate of each exchanger element in case of elements connected in series.

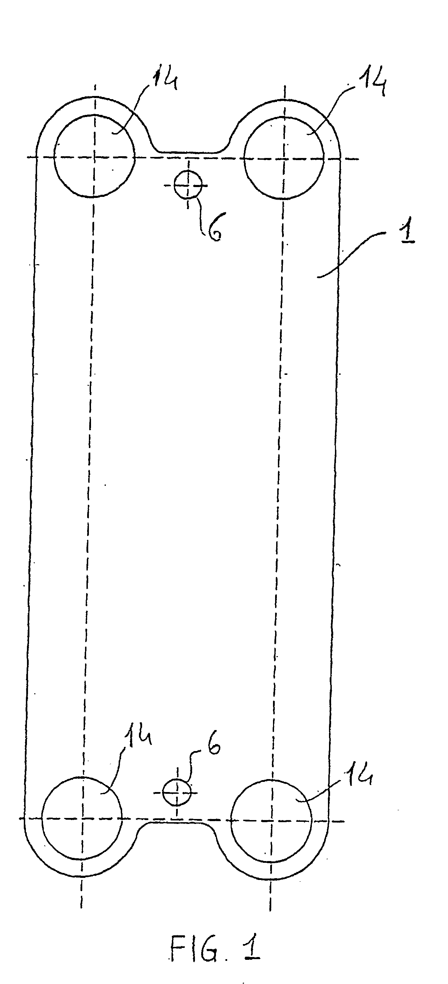

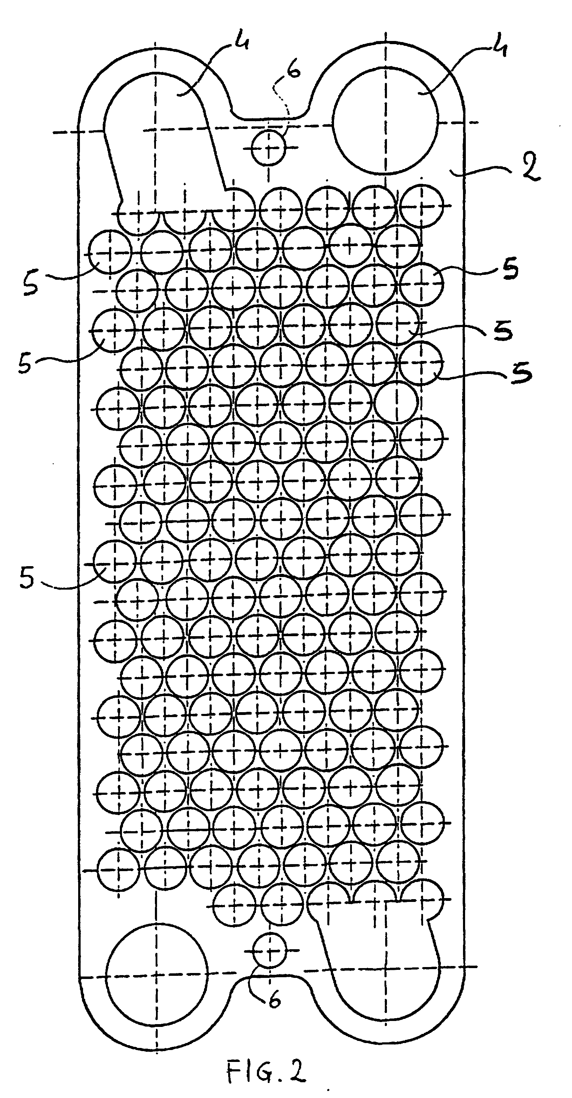

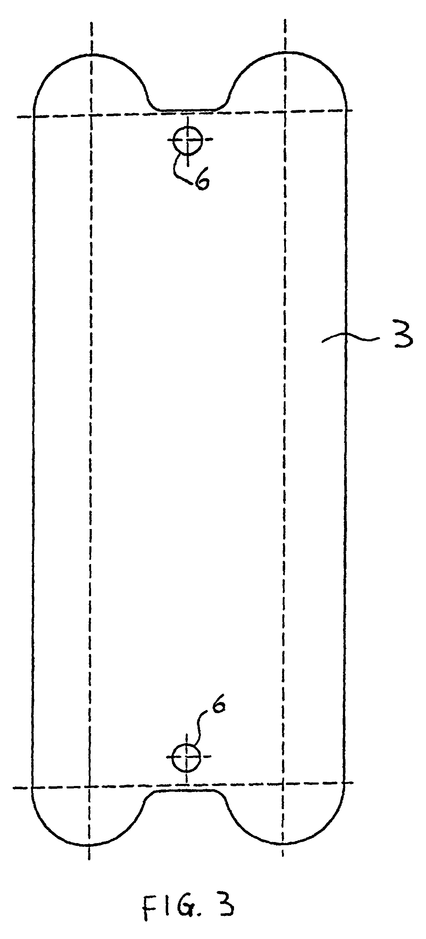

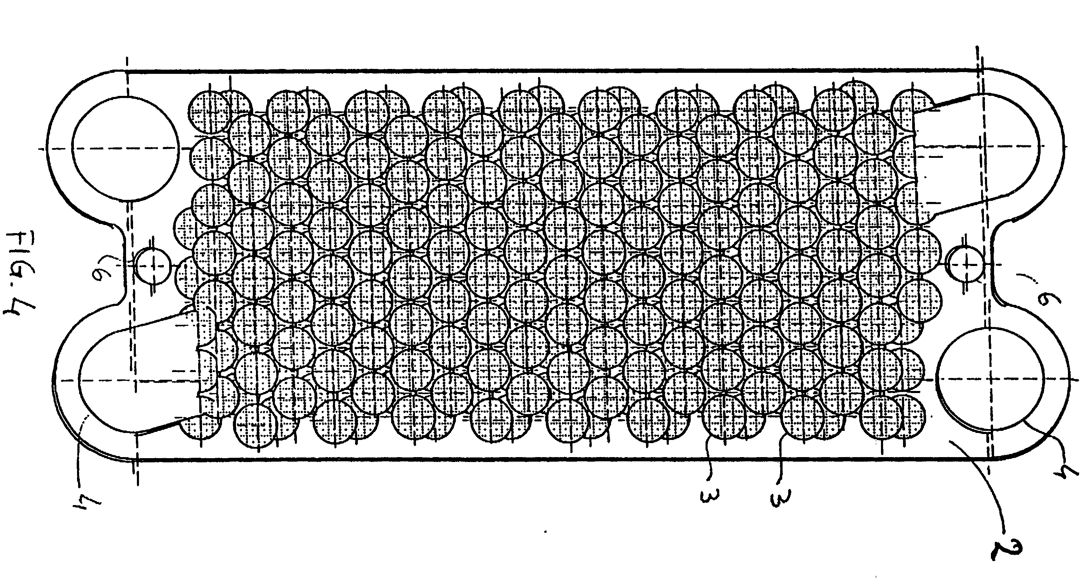

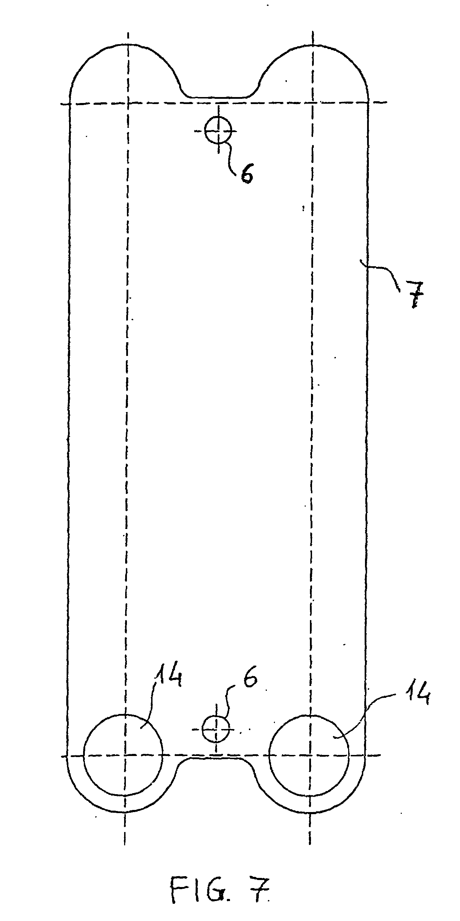

With reference to Figures 1 to 4 and 7, the elementary architecture which characterizes the invention and makes both the manufacturing and the assembling easy and economical may be seen. In fact, the essential parts to provide exchanger elements connected in series and/or in parallel are three plates which may have or not the same thickness but have the same outer periphery and are manufactured by simple punching.
Said plates are particularly an outer plate 1 which is used to connect in parallel the exchanger elements both as separation plate between the single exchanger elements and as end .plate of the exchanger itself at the inlet/outlet side of the carrier fluid or fluids; an inner plate 2 provided with a group of second holes 5 crossed by the fluid following its winding way in a single heat exchanger element, said inner plate being further provided with first holes 4 at the ends of a plate diagonal which communicate to some second holes 5, for example, three holes of the nearest group which in turn communicate to one another; finally, a blind outer plate 3 is provided at the free end of the last exchanger element.
As shown in figures 1 and 7, outer plates are provided with third holes 14 at one or both ends of plate diagonals.
In order to connect two or more exchanger elements in series, it is sufficient to use outer plate 7 instead of outer plate 1. Therefore, also exchangers including both elements connected in parallel and elements connected in series may be provided.
As can be seen from the above-mentioned Figures, all of the plates have two centering holes 6 along the longitudinal midline near the minor sides.
Particularly significant is Figure 4 which shows how the inner plates 2 are used. The latter are placed side by side and rotated through 180° to each other. Such reciprocal positioning causes the second holes 5 in series in plate 2 to be misaligned to those in the rotated adjacent inner plate, designated by 2bis.
Another important characteristic is that, in case of parallel-connected exchanger elements, the welding of the plates forming the exchanger is carried out at the not perforated surface of inner plates 2 and 2bis outside the area of second holes 5 and also at all small areas among holes 5 which partially mate with similar areas of the adjacent plate.
As already mentioned, in case of heat exchanger having exchanger elements connected in series, plate 1 is replaced by plate 7 having only two third holes 14, as shown in Figure 7.

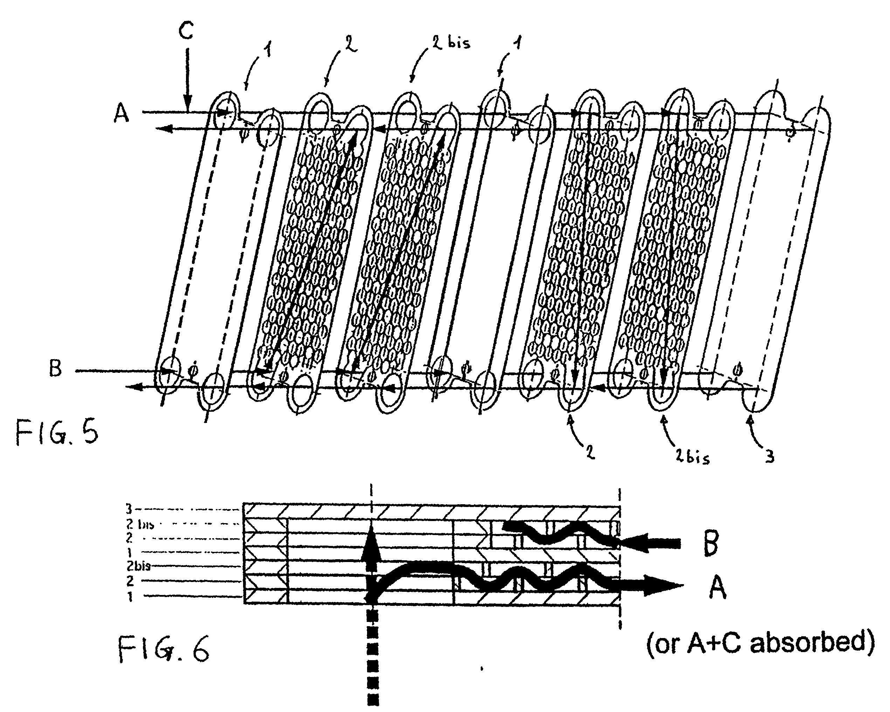

Referring now to Figures 5 and 6, both the arrangement of the plates to form the several exchanger elements (connected in parallel in Figure 5) and the way followed by the fluids indicated at A and B, which may be the same or different, can be clearly seen.
Figure 5 further shows how a countercurrent exchanger may be provided by simply rotating through 180° about their longitudinal axis a pair of inner plates 2-2bis with respect to the pair of the adjacent exchanger elements.
To this regard, it should be appreciated that an exchanger having currents flowing in the same direction may be provided when the pairs of inner plates are not rotated through 180° about their longitudinal axis.

A further feature of the invention is that, upon flowing between inner plates 2 and 2bis, two fluids put in contact to each other before their entering the exchanger, for example a fluid A and a fluid C, may be mixed and/or absorbed and/or reacted. Said fluids A and C may also belong to different phases, for example one to liquid phase and the other to gas phase.
It is then self-evident that a heat exchange will take place also with the so-called fluid B if fluids A and C upon mixing to each other are subjected to an exothermic or endothermic reaction.
The subjected invention, therefore, does not only provide the heat exchange between two fluids A and B at different temperatures but also allows two fluids A and C to be mixed together and, if it is the case, to be reacted in exo/endothermic way. In the latter case the heat exchange with fluid B also includes the energy given off/absorbed from the reaction between A and C.
The section of Figure 6 particularly illustrates the arrangement of the plates in the exchanger of Figure 5 and shows the ways followed by fluids A and B (or A+C and B) within the respective pairs of inner plates 2 and 2bis.
It should be noted that the thickness of the inner plates 2, 2bis may be advantageously changed to vary the fluid flow section, thus modifying the flow resistance according to a variety of requirements. Moreover, such a modification of the flow resistance can be also provided by changing the arrangement, the size and the form of second holes 5.

## Claims

1. A flat-plate heat and mass transfer exchanger providing in operation of the exchanger a turbulent motion of inner fluids, comprising exchanger elements, each consisting of two outer plates (1 or 7, 3) between which two inner plates (2, 2bis) are located, said inner plates (2, 2bis) being perforated so as to define, together with said outer plates (1 or 7, 3), a winding path for the fluids (A or A+C, B) which cross said exchanger elements, said inner and outer plates (1 or 7, 2, 2bis and 3) having the same external form and being flat and of generally rectangular shape; the inner plates (2, 2bis), besides first holes (4), having a group of second holes (5) formed according to a geometry such that the second holes (5) of one inner plate (2) are misaligned to the second holes (5) of the other inner plate (2bis), thus providing a very winding path for the fluids, **characterized in that** the inner plates (2, 2bis) are equal in shape and are placed side by side and rotated through 180° to each other in their plane.

2. The heat and mass transfer exchanger of claim 1, **characterized in that** the outer plates (1 or 7) have third holes (14) near the ends of the outer plate diagonals, said holes (14) having the function of allowing the fluids to pass from one exchanger element to the other.

3. The heat and mass transfer exchanger of the preceding claims, **characterized in that** all of the inner and outer plates are provided with centering holes (6) in order to allow the assembling of the inner and outer plates of the exchanger by automatic centering that uses said centering holes (6), and the exchanger is assembled without using any gasket.

4. The heat and mass transfer exchanger of the preceding claims, **characterized in that** the exchanger elements are connected in parallel.

5. The heat and mass transfer exchanger of claims 1 to 3, **characterized in that** the the exchanger elements are connected in series.

6. The heat and mass transfer exchanger of the preceding claims, **characterized in that**, in order to vary the flow resistance of the exchanger, the inner plates (2, 2bis) have a different thickness and/or a different geometry and size of the second holes (5).

7. The heat and mass transfer exchanger of the preceding claims, **characterized in that** the plates of the exchanger are welded at the unperforated surface of the inner plates (2, 2bis) outside the area of the second holes (5) and also at all small areas around the second holes (5) which partially mate with similar areas of the adjacent inner plates.

8. The heat and mass transfer exchanger of the preceding claims, **characterized in that** a part of the exchanger elements are connected in series and an other part of the exchanger elements are connected in parallel.

## Patentansprüche

1. Flachplattiger Wärme- und Stoffübertragungstauscher, der beim Tauscherbetrieb eine turbulente Bewegung von inneren Fluids vorsieht, mit Austauscherelementen, die jeweils aus zwei äußeren Platten (1 oder 7, 3) bestehen, zwischen denen zwei innere Platten (2, 2bis) angeordnet sind, wobei die inneren Platten (2, 2bis) derart perforiert sind, dass sie zusammen mit den äußeren Platten (1 oder 7, 3) einen gewundenen Weg für die Fluids (A oder A+C, B) bilden, der die Austauschelemente kreuzt, wobei die inneren und äußeren Platten (1 oder 7, 2, 2bis und 3) dieselbe Außenform aufweisen und flach und im allgemeinen in rechtwinkliger Gestaltung vorgesehen sind; wobei die inneren Platten (2, 2bis) neben den ersten Löchern (4) eine Gruppe von zweiten Löchern (5) besitzen, die gemäß einer Geometrie derart gebildet sind, dass die zweiten Löcher (5) von einer inneren Platte (2) nicht auf die zweiten Löcher (5) der anderen inneren Platte (2bis)ausgerichtet sind, wodurch ein sehr gewundener Weg für die Fluids vorgesehen ist, **dadurch gekennzeichnet, dass** die inneren Platten (2, 2bis) in ihrer Gestaltung gleich und nebeneinander und um 180° zueinander gedreht in ihrer Ebene angeordnet sind.

2. Wärme- und Stoffübertragungstauscher nach Anspruch 1, **dadurch gekennzeichnet, dass** die äußeren Platten (1 oder 7) dritte Löcher (14) nahe der Enden von Diagonalen der äußeren Platte aufweisen, wobei die Löcher (14) die Funktion haben, dass die Fluids von einem Austauschelement zum anderen treten können.

3. Wärme- und Stoffübertragungstauscher nach den vorangehenden Ansprüchen, **dadurch gekennzeichnet, dass** alle inneren und äußeren Platten mit Zentrierlöchern (6) versehen sind, damit der Zusammenbau der inneren und äußeren Platten des Tauschers durch automatisches Zentrieren vorgenommen werden kann, das die Zentrierlöcher (6) verwendet, und dass der Tauscher ohne Verwendung irgendeiner Dichtung zusammengebaut ist.

4. Wärme- und Stoffübertragungstauscher nach den vorangehenden Ansprüchen, **dadurch gekennzeichnet, dass** die Austauschelemente parallel geschaltet sind.

5. Wärme- und Stoffübertragungstauscher nach den Ansprüchen 1 bis 3, **dadurch gekennzeichnet, dass** die Austauschelemente in Reihe geschaltet sind.

6. Wärme- und Stoffübertragungstauscher nach den vorangehenden Ansprüchen, **dadurch gekennzeichnet, dass** zur Veränderung des Strömungswiderstandes des Tauschers die inneren Platten (2, 2bis) eine unterschiedliche Dicke und/oder eine unterschiedliche Geometrie und Größe der zweiten Löcher (5) aufweisen.

7. Wärme- und Stoffübertragungstauscher nach den vorangehenden Ansprüchen, **dadurch gekennzeichnet, dass** die Platten des Tauschers an der unperforierten Fläche der inneren Platten (2, 2bis) außerhalb des Bereichs der zweiten Löcher (5) und auch an allen kleinen Bereichen um die zweiten Löcher (5) verschweißt sind, welche teilweise zu ähnlichen Bereichen der angrenzenden inneren Platte passen.

8. Wärme- und Stoffübertragungstauscher nach den vorangehenden Ansprüchen, **dadurch gekennzeichnet, dass** ein Abschnitt der Austauschelemente in Reihe und ein anderer Abschnitt der Austauschelemente parallel geschaltet sind.

## Revendications

1. Echangeur de transfert de masse et de chaleur à plaques plates fournissant, lors du fonctionnement de l'échangeur, un mouvement turbulent de fluides intérieurs, comportant des éléments d'échangeur, chacun constitué de deux plaques extérieures (1 ou 7, 3) entre lesquelles deux plaques intérieures (2, 2 bis) sont positionnées, lesdites plaques intérieures (2, 2 bis) étant perforées de manière à définir, ensemble avec lesdites plaques extérieures (1 ou 7, 3), un trajet d'enroulement pour les fluides (A ou A+C, B) qui croisent lesdits éléments d'échangeur, lesdites plaques intérieures et extérieures (1 ou 7, 2, 2 bis et 3) ayant la même forme externe et étant plates et de forme généralement rectangulaire, les plaques intérieures (2, 2 bis), en plus de premiers trous (4), ayant un groupe de deuxièmes trous (5) formés conformément à une géométrie telle que les deuxièmes trous (5) d'une plaque intérieure (2) ne sont pas alignés avec les deuxièmes trous (5) de l'autre plaque intérieure (2 bis), en fournissant ainsi un trajet très sinueux pour les fluides, **caractérisé en ce que** les plaques intérieures (2, 2 bis) sont égales en termes de forme et sont placées côte à côte et tournées de 180° l'une par rapport à l'autre dans leur plan.

2. Echangeur de transfert de masse et de chaleur selon la revendication 1, **caractérisé en ce que** les plaques extérieures (1 ou 7) ont des troisièmes trous (14) à proximité des extrémités des diagonales des plaques extérieures, lesdits trous (14) ayant la fonction de permettre aux fluides de passer d'un élément d'échangeur à un autre.

3. Echangeur de transfert de masse et de chaleur selon les revendications précédentes, **caractérisé en ce que** la totalité des plaques intérieures et extérieures sont munies de trous de centrage (6) afin de permettre permettre l'assemblage des plaques intérieures et extérieures de l'échangeur par un centrage automatique qui utilise lesdits trous de centrage (6), et l'échangeur est assemblé sans utiliser un quelconque joint d'étanchéité.

4. Echangeur de transfert de masse et de chaleur selon les revendications précédentes, **caractérisé en ce que** les éléments d'échangeur sont connectés en parallèle.

5. Echangeur de transfert de masse et de chaleur selon les revendications 1 à 3, **caractérisé en ce que** les éléments d'échangeur sont connectés en série.

6. Echangeur de transfert de masse et de chaleur selon les revendications précédentes, **caractérisé en ce que**, afin de faire varier la résistance à l'écoulement de l'échangeur, les plaques intérieures (2, 2 bis) ont une épaisseur différente et/ou une géométrie et une taille des deuxièmes trous (5) différentes.

7. Echangeur de transfert de masse et de chaleur selon les revendications précédentes, **caractérisé en ce que** les plaques de l'échangeur sont soudées au niveau de la surface non-perforée des plaques intérieures (2, 2 bis) à l'extérieur de la zone des deuxièmes trous (5) et également au niveau de toutes les petites zones autour des deuxièmes trous (5) qui s'accouplent partiellement avec des zones similaires des plaques intérieures adjacentes.

8. Echangeur de transfert de masse et de chaleur selon les revendications précédentes, **caractérisé en ce qu'**une partie des éléments d'échangeur est connectée en série et une autre partie des éléments d'échangeur est connectée en parallèle.
